# EUROPEAN PATENT APPLICATION

(11) **EP 1 251 460 A1**
(43) Date of publication of application: **23.10.2002**
(21) Application number: 01610043.0
(22) Date of filing: 19.04.2001
(51) Int. Cl.: G06T 1/60

(54) **Adaptive method for allocation of random access memory**

(71) Applicant: TELEFONAKTIEBOLAGET L M ERICSSON (publ), 126 25 Stockholm (SE)
(72) Inventor: Hansson, Ted, 214 35 Malmö (SE); Tran, To, 265 39 Astorp (SE)
(74) Representative: Sigh, Erik

(57) **Abstract**

A method of processing data in a device having a processor with an internal memory, an external memory containing data to be processed, and a bus interconnecting the processor and the external memory. Before transferring data to be processed from the external memory to the internal processor memory, the size of the actually available free memory is determined and compared to the amount of data to be processed. If the amount of data to be processed does not exceed the size of the free processor memory then all data is transferred to the processor memory. After processing, processed data is returned. If the amount of data to be processed exceeds the size of the free processor memory then the free internal memory is reserved, and portions of data each not exceeding the reserved internal memory are transferred one at a time to the internal processor memory for processing. After processing, the processed data are returned, and a new portion of data is transferred to the internal processor memory for processing. The method thus adapts to the actually available free internal processor memory, which is the optimal use of the processor memory resulting in the shortest possible processing time and the best possible memory use. The method is particularly suited for the processing of JPEG 2000 image files using a discrete wavelet transform (DWT).

## Description

The invention relates to efficient use of available internal memory in a processor in a device with limited internal memory capacity.

### Background of the invention

Digital images have become widespread, and digital images are frequently exchanged and transmitted eg over the Internet. With the event of eg digital consumer cameras the user can record his or her own images. High-resolution digital images require large memory capacity, and digital images are therefore often compressed, whereby less memory is required. Depending on the compression algorithm the memory required for a digital image can be reduced by a factor typically between 5 and 50 or more. In general, compression and decompression algorithms with a high compression factor require more calculations by the processor than algorithms with a low compression factor.

In digital devices the processor often has an internal memory of limited capacity and a larger external memory accessible to the processor via a bus. Image processing such as compression and decompression of image data are operations, which require processing of many data, and thus load the processor and its internal memory. In many digital devices the processor and its internal memory is optimised to special tasks, eg in mobile telephones the processor is optimised to manage the traffic of speech and other data between the mobile phone and a base station. Image files are most often stored in a compressed format requiring less memory space.

The new still image compression standard JPEG 2000 is based on a discrete wavelet transform (DWT) and an inverse discrete wavelet transform (IDWT). The discrete wavelet transform used in JPEG 2000 is known to consume or occupy more memory than other transforms such as the discrete cosine transform used in the JPEG standard. It is therefore desirable to optimise the use of memory, especially in memory critical environments like DSP's and mobile terminals. Currently, there is no JPEG 2000 encoder/decoder designed for DSP's on the market.

In mobile terminals such as mobile phones the input data to the DWT/IDWT routines are stored in an external memory, eg a flash memory. The DWT/IDWT is performed in the DSP. When a compressed digital image has to be processed and displayed on the display of the mobile phone, the whole compressed file has to be processed. Digital image files may be too large for the fast internal memory of the processor, and therefore portions of the file must be transferred from the external memory to the internal memory for processing and returned to the external memory, whereafter another portion of the file is transferred to the processor for processing. This requires setting up the bus for each transfer operation, which together with the several transfers is time consuming. Several methods can be used for managing the transfer of image data and their processing.

One possible method would be to transfer all data to the internal memory of the processor. This gives the fastest transform, but it requires a large internal memory in the processor, depending on size of the image.

Another possible method would be to transfer only small fractions of the image data, eg corresponding to one line in the image, to the internal memory of the processor and then perform the transform operation and transfer the transformed data back to the external memory. This method only requires little internal processor memory, but the data transfer between the internal and external memories will be very time consuming.

The internal processor memory could have a certain memory space reserved for such purposes, but at times where no use is made of the reserved memory for image transformation, the reserved memory space could advantageously be used for other applications. Due to the limited memory size in the DSP and to the fact that the size of free memory depends on other applications that may be active, eg voice encoder and MP3 player, the image transformation would only be able to operate with a small, predefined memory size. At other times the internal processor memory may not be fully used.

Thus, a problem with DWT/IDWT and other algorithms exists in memory critical environments like DSP and mobile terminals. If all input data is transferred at the same time to the internal memory of the processor the fastest transform is achieved at the expense of memory being used. On the other hand, if small amounts of data are to be transferred to the internal memory, whereby the memory is free to perform other tasks at the same time, the process will take a long time. None of the known methods thus allow an optimal use of the internal processor memory.

### Prior art

WO 97/06512 discloses a method for rendering a display image. A tiler is disclosed for rendering instructions from a shared memory system. It is described how the tiler stores pixel data in buffers and that the amount of data stored is dynamically adjusted to available memory capacity in order to avoid memory overflow. See page 15, lines 20-22; page 65, line 32 to page 66, line 7; page 73, line 20 to page 76, line 29; figures 4A and 4B. The latter passage of this document relates particularly to the problem of avoiding memory overflow.

EP 825 777 discloses a method and an apparatus for calculation of data amount of compression-coded data before a code image is recorded. It discusses an interleave unit that is efficiently set to have a size smaller than the memory capacity when the memory capacity can be specified. See page 19, line 48 to page 20, line 20; figures 70-74. This is more or less equivalent to the method described in the above-referenced WO 97/06512.

WO 00/02319 describes methods for adaptively coding and decoding data such as images according to the DWT method.

WO 98/07278 describes a method for encoding an image signal. The cache memory size is allowed to vary according to different properties of an image. See pages 28-29.

US 5 267 334 describes methods for coding and decoding images according to the DCT method. See the abstract.

From the two documents WO 97/06512 and EP 825 777 it is known to adjust the amount of image data in accordance with available memory in the processes of encoding/decoding and displaying images. In WO 97/06512 the problem is to avoid memory overflow, and both the problem and its solution seem to be trivial. In EP 825 777 the problem and its solution are related to converting multimedia information into optically readable code pattern image data.

### Summary of the invention

The invention suggests a hybrid between the two methods, whereby the image transformation routines are based on the actually free memory in the processor and the amount of data to be processed, eg the size of the image file. Hereby not only the processor and its internal memory are used optimally, but also data bus, and the image transformation is always done as fast as possible without interfering with other routines. The invention is not limited to transformation of image data or to the DWT/IDWT routines.

### Brief description of the drawings

Figure 1 shows a schematic block diagram of a mobile communications device using the invention, and
Figure 2 is a flow chart illustrating the method of the invention.

### Detailed description of the invention

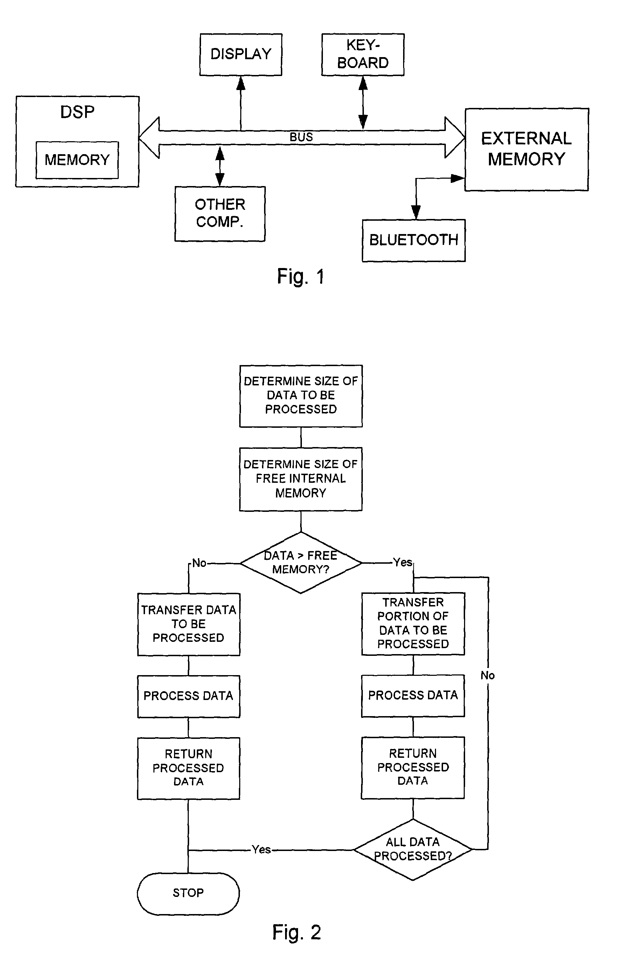

Figure 1 shows a mobile communications device, which preferably is a mobile communications device such as a mobile telephone. The mobile communications device has a conventional processor such as a digital signal processor DSP with a conventional internal memory such as a DARAM or a SARAM. Via a digital bus the processor communicates with an external memory such as a FLASH ROM and with a display and a keypad. The display is of a conventional type capable of displaying digital images or graphics and alphanumeric characters. Other components, which are necessary for the operation of the telephone, are also indicated as connected to the bus. Such components include radio frequency receiver and transmitter, microphone and receiver transducer etc. The external memory will typically contain data relating to the operation of the communications device and user related data such as a personalised telephone book. Other data such as image data can also be stored in the external memory. Usually stored image data are compressed using eg the JPEG 2000 standard. Image data, whether compressed or not, can take up a considerable portion of the memory.

Figure 2 illustrates the method of the invention. A compressed image file to be decompressed in the processor must first be transferred to the internal memory in the processor for being processed. Image files are often larger than the available free memory in the processor, and before compressed image data are transferred to the processor, it is determined how much free memory is actually available in the processor.

If the processor is almost in idle mode, ie not occupied by heavy tasks, there will be a correspondingly relatively large free internal memory available, and a portion of the image data to be processed of a size corresponding to the relatively large free memory will be transferred from the external memory to the internal memory for processing. After processing the processed data are returned to the external memory or to any other device such as a display for being displayed, and a new relatively large portion of image data are transferred from the external memory to the internal memory for processing. In this case the entire image will be processed relatively quickly using only few time consuming data transfers.

On the other hand, if the processor is heavily occupied by other tasks, its internal memory will be correspondingly occupied, and relatively little free internal memory will be available, and a portion of the image data to be processed of a size corresponding to the relatively small free memory will be transferred from the external memory to the internal memory for processing. After processing the processed data are returned, and a new relatively small portion of image data are transferred from the external memory to the internal memory for processing. In this case the entire image will be processed relatively slowly, since relatively many time consuming data transfers are used.

Data to be processed need not be image data, and the described method can be used on any data to be processed in a processor with an internal memory with a free memory capacity insufficient for the amount of data to be processed.

Files to be processed, such as images in JPEG 2000 format or music files in MP3 format, can be downloaded to the communications device eg from the telephone network.

Figure 1 also shows a Bluetooth short-range communications device, which uses the standardised Bluetooth communications protocol. Digital consumer cameras store images in compressed format, eg the in JPEG 2000 format. Using the Bluetooth communication device compressed images can be downloaded from a digital camera to the mobile communications device. Such stored compressed images can be decompressed using the method of the invention and displayed on the display of the mobile telephone.

In case a series of images are to be processed and displayed in succession, possibly as a sequence of moving pictures, it is important that the processing time for each image is as short as possible, so that images can possibly follow in rapid succession. The method of the invention ensures fast processing of eg image data with a speed determined by the available free internal memory in the processor.

### References

The Bluetooth specification can be found on *The Official Bluetooth Website* on following Internet address:
http://www.bluetooth.com/developer/specification/core.asp

Information on the JPEG 2000 standard can be found on following Internet address:
http://www.jpeg.org/JPEG2000.htm

## Claims

1. A method of processing data in a device having
- a processor with an internal memory,
- an external memory containing data to be processed, and
- a transmission path for transferring data between the external memory and the internal memory,
the method comprising
- determining the size of the data to be processed,
- determining the size of the actually free internal memory, and
if the size of the data to be processed is smaller than or equal to the size of the actually free internal memory in the processor,
- transferring the data to be processed from the external memory to the internal memory of the processor, and
- processing the data to be processed,
- transferring the processed data to the external memory,
or if the size of the data to be processed is greater than the size of the actually free internal memory in the processor,
- reserving a portion of the internal memory corresponding to and not exceeding the actually free internal memory,
- transferring a portion of the data to be processed from the external memory to the reserved portion of the internal memory, the size of transferred data not exceeding the reserved portion of the internal memory,
- processing the data transferred to the internal memory,
- transferring the processed data to the external memory, and
- if unprocessed data still remain in the external memory, repeating the steps of transferring a portion of data, processing transferred data and transferring processed data.

2. A method according to claim 1, **characterized in that** the data to be processed represent images.

3. A method according to claim 2, **characterized in that** the images are represented in JPEG 2000 format.

4. A method according to claim 3, **characterized in that** the data are processed using a discrete wavelet transform (DWT).

5. A method according to claim 3, **characterized in that** the data are processed using an inverse discrete wavelet transform (IDWT).

6. A device having
- a processor with an internal memory,
- an external memory for containing data to be processed, and
- a transmission path for transferring data between the external memory and the internal memory, **characterized in that** data are processed using the method according to any one of claims 1-5.

7. A device according to claim 6, **characterized in that** is has a display for displaying images.

8. A device according to claim 7, **characterized in that** the device is a mobile wireless communications device.

9. A device according to claim 8, **characterized in that** it has a short-range communications device.

10. A device according to claim 9, **characterized in that** the short-range communications device uses the Bluetooth communications protocol.
